# EUROPEAN PATENT APPLICATION

(11) **EP 4 650 412 A1**
(43) Date of publication of application: **19.11.2025**
(21) Application number: 23916136.7
(22) Date of filing: 13.11.2023
(51) Int. Cl.: C09K 3/18

(54) **SURFACE MODIFIER**

(30) Priority: 13.01.2023 JP 2023003572
(71) Applicant: Unimatec Co., Ltd., Tokyo 105-0012 (JP)
(72) Inventor: ANBAI, Hiroyuki, Kitaibaraki-shi, Ibaraki 319-1593 (JP); HAYASHI, Hideki, Kitaibaraki-shi, Ibaraki 319-1593 (JP)
(74) Representative: Kraus & Lederer PartGmbB
(86) International application number: PCT/JP2023/040781
(87) International publication number: WO 2024/150518

(57) **Abstract**

A surface modifier comprising, as an active ingredient, a condensation reaction product of a perfluoropolyether group-containing silane compound and silicate oligomer at a mass ratio of 40:60 to 10:90, wherein the perfluoropolyether group-containing silane compound is a compound represented by the general formula:

CF₃(CF₂)ₘO(C₃F₆O)ₙ(C₂F₄O)ₒ(CF₂O)ₚ(C₂F₄)_{q}(CF₂)ᵣCONX(CH₂)ₛSi(OR)₃ [I]

(wherein m is an integer of 0 to 2, preferably 2; n, o, and p are each an integer of 0 to 50, preferably 5 to 20; q and r are each an integer of 0 to 2; s is an integer of 0 to 10, preferably 1 to 3; X is a hydrogen atom or (CH₂)sSi(OR)₃; and R is an alkyl group having 1 to 3 carbon atoms). The surface modifier has good coating film transparency and liquid storage stability, as well as excellent water- and oil- repellency, stain resistance, weather resistance, and durability (abrasion resistance).

## Description

### TECHNICAL FIELD

The present invention relates to a surface modifier. More particularly, the present invention relates to a surface modifier that can form a coating film having excellent water- and oil- repellency, stain resistance, weather resistance, durability (abrasion resistance), transparency, and liquid storage stability.

### BACKGROUND ART

Surface modifiers using fluorine-containing compounds are used for the purpose of imparting slipperiness, water repellency, stain resistance, and the like to glass substrate surfaces, such as touch panels, eyeglass lenses, and windshields. Actually, perfluoroalkyl group-containing silane coupling agents and perfluoropolyether group-containing silane coupling agents are mainly used.

Perfluoroalkyl group-containing silane coupling agents have rigid monomolecular chains with a tendency to crystallize, resulting in coating films with excellent weather resistance; however, there are issues regarding stain resistance and abrasion resistance. Although performance is easily demonstrated with a perfluoroalkyl group having 8 or more carbon atoms, telomer compounds containing a perfluoroalkyl group having this number of carbon atoms are reportedly biodegraded in the environment and converted into compounds with relatively high bioaccumulation and environmental concentration. There are concerns about exposure during the treatment process, release and diffusion to the environment from wastes, treated substrates, etc.

Furthermore, for telomer compounds containing a perfluoroalkyl group having 8 or more carbon atoms, the generation and contamination of highly bioaccumulative perfluorooctanoic acids are unavoidable in their production process. Accordingly, there is a background that manufacturers of such telomer compounds have been withdrawing from the production of the compounds or replacing them with compounds containing a perfluoroalkyl group having 6 or less carbon atoms.

On the other hand, compounds containing a perfluoroalkyl group having 6 or less carbon atoms have significantly lower crystallinity, melting point, and glass transition point Tg than those of compounds having 8 or more carbon atoms, and are highly affected by the environment in which they are used. Accordingly, sufficient performance required cannot be achieved, and durability etc. are also affected.

Here, perfluoropolyether group-containing silane coupling agents are compounds in which ether bonds are introduced into perfluoroalkyl chains, and have amorphous, oil-like flexible molecular chains. Thus, they have water- and oilrepellency, chemical resistance, slipperiness, stain resistance, mold releasability, and the like. Industrially, taking advantage of these properties, they have been widely used for equipment oil inhibitors, mold release agents, cosmetics, protective films, and the like.

Patent Document 1 has reported that when a coating liquid prepared by dissolving the fluorine-containing silane compound disclosed therein in a fluorine-based solvent is applied to a glass surface, the surface is coated with a coating film of a perfluoropolyether group-containing silane coupling agent, whereby surface free energy can be reduced, and water- and oil- repellency, stain resistance, mold releasability, and the like can be imparted. Although this coating film has good initial performance after coating, its durability (weather resistance, abrasion resistance, and mold releasability) may be insufficient. Thus, further improvement of durability has been required.

Patent Document 2 has proposed using a coating liquid prepared by adding a fluorine-containing alkoxysilane compound to silica sol to increase fingerprint adhesion and stain resistance. However, the treating agent disclosed therein has issues in that solvent-insoluble compounds are formed and precipitated after the reaction, and further in that after coating on a substrate such as glass, the surface is tinged with a structural color, the appearance of the coating film is disturbed, or the storage stability of the solution is not satisfactory.

### PRIOR ART DOCUMENTS

### PATENT DOCUMENTS

Patent Document 1 : WO 2015/146861 Al
Patent Document 2 : JP-A-2009-51976

### OUTLINE OF THE INVENTION

### PROBLEM TO BE SOLVED BY THE INVENTION

An object of the present invention is to provide a surface modifier that has good coating film transparency and liquid storage stability, as well as excellent water- and oil- repellency, stain resistance, weather resistance, and durability (abrasion resistance).

### MEANS FOR SOLVING THE PROBLEM

The above object of the present invention can be achieved by a surface modifier comprising, as an active ingredient, a condensation reaction product of a perfluoropolyether group-containing silane compound and silicate oligomer at a mass ratio of 40:60 to 10:90, wherein the perfluoropolyether group-containing silane compound is a compound represented by the general formula:

CF₃(CF₂)ₘO(C₃F₆O)ₙ(C₂F₄O)ₒ(CF₂O)ₚ(C₂F₄)_{q}(CF₂)ᵣCONX(CH₂)ₛSi(OR)₃ [I]

(wherein m is an integer of 0 to 2, preferably 2; n, o, and p are each an integer of 0 to 50, preferably 5 to 20; q and r are each an integer of 0 to 2; s is an integer of 0 to 10, preferably 1 to 3; X is a hydrogen atom or (CH₂)sSi(OR)₃; and R is an alkyl group having 1 to 3 carbon atoms).

### EFFECT OF THE INVENTION

The surface modifier according to the present invention uses a perfluoropolyether group-containing silane compound having a flexible structure with low accumulation concerns in biological and environmental aspects, and adds this compound to silicate oligomer with multiple adhesive functional groups, thereby exhibiting excellent effects of not only water- and oil- repellency, but also improved adhesion to the substrate, better dynamic water repellency and dynamic oil repellency (lower sliding angle), and improved weather resistance and abrasion resistance. Such effects are considered to be exhibited because the perfluoropolyether chain formed on the surface layer and the dense polysiloxane structure formed between the substrates serve as strong binders, and the density of the perfluoropolyether chain is adjusted to ensure high motility. This surface modifier is diluted to an appropriate concentration, so that coating film transparency is maintained, and liquid storage stability is ensured.

### EMBODIMENTS FOR CARRYING OUT THE INVENTION

The perfluoropolyether group-containing silane compound include is a compound represented by the general formula:

CF₃(CF₂)ₘO(C₃F₆O)ₙ(C₂F₄O)ₒ(CF₂O)ₚ(C₂F₄)_{q}(CF₂)ᵣCONX(CH₂)ₛSi(OR)₃ [I]

(wherein m is an integer of 0 to 2, preferably 2; n, o, and p are each an integer of 0 to 50, preferably 5 to 20; q and r are each an integer of 0 to 2; s is an integer of 0 to 10, preferably 1 to 3; X is a hydrogen atom or (CH₂)sSi(OR)₃; and R is an alkyl group having 1 to 3 carbon atoms) are used.

Examples of such a compound include

C₃F₇O[CF(CF₃)CF₂O]ₙCF(CF₃)CONH(CH₂)₃Si(OCH₃)₃

C₃F₇O[CF(CF₃)CF₂O]ₙCF(CF₃)CON[(CH₂)₃Si(OCH₃)₃]₂

C₃F₇O[CF(CF₃)CF₂O]ₙ(CF₂O)ₚCONH(CH₂)₃Si(OCH₃)₃

C₃F₇O[CF(CF₃)CF₂O]ₙ(CF₂O)ₚCON[(CH₂)₃Si(OCH₂CH₂CH₃)₃]₂

C₃F₇O(CF₂CF₂CF₂O)ₙCF₂CF₂CONH(CH₂)₃Si(OCH₃)₃

C₃F₇O(CF₂CF₂CF₂O)ₙCF₂CF₂CONH(CH₂)₃Si(OCH₂CH₃)₃

C₂F₅O(CF₂CF₂O)ₒ(CF₂O)ₚCONH(CH₂)₃Si(OCH₃)₃

CF₃O(CF₂CF₂O)ₒCF₂CONH(CH₂)₃Si(OCH₃)₃

, and the like; preferably,

C₃F₇O[CF(CF₃)CF₂O]ₙCF(CF₃)CONH(CH₂)₃Si(OCH₃)₃

C₃F₇O[CF(CF₃)CF₂O]ₙCF(CF₃)CON[(CH₂)₃Si(OCH₃)₃]₂

are used.

As the silicate oligomer, methyl silicate, ethyl silicate, or a mixture thereof having a weight average molecular weight Mw of 500 to 1500 is used. If one having a weight average molecular weight Mw of greater than this range is used, storage stability and inherent water- and oil- repellency cannot sufficiently be exhibited due to thickening and gelation. If one having a weight average molecular weight Mw of less than this range is used, coating film unevenness easily occurs, and durability cannot sufficiently be exhibited.

As such silicate oligomers, commercial products can be used as they are. Examples thereof for methyl silicate include MKC Silicate MS51 and MS56 produced by Mitsubishi Chemical Corporation, examples thereof for ethyl silicate include Ethyl Silicate 40 produced by Colcoat Co., Ltd., and examples thereof for the mixture of methyl silicate and ethyl silicate include EMS-485 produced by Colcoat Co., Ltd.

The perfluoropolyether group-containing silane compound and the silicate oligomer are used at a mass ratio of 40:60 to 10:90, preferably 40:60 to 20:80. If the perfluoropolyether group-containing silane compound is used at a ratio of greater than this range in relation to the silicate oligomer, the coating film appearance, film forming properties, stain resistance, weather resistance, durability (abrasion resistance), and the like are inferior. In contrast, if the perfluoropolyether group-containing silane compound is used at a ratio of less than this range, water- and oil- repellency and stain resistance are reduced, gelation tends to occur, and liquid storage stability tends to be insufficient.

The perfluoropolyether group-containing silane compound and the silicate oligomer are dissolved in a solvent that can dissolve them, preferably a mixed solvent of a fluorine-based organic solvent and a water-soluble organic solvent, together with a catalyst, followed by hydrolysis and a condensation reaction, thereby preparing a surface modifier stock solution.

As fluorine-based organic solvents, fluorinated alkanes, fluoroalkyl ethers, and the like can be used. Examples thereof include 1,4-bis(trifluoromethyl)benzene, ethyl nonafluorobutyl ether, ethyl nonafluoroisobutyl ether, 1,1,2,2-tetrafluoroethyl-2,2,2-trifluoroethyl ether, 1,1,1,2,3,4,4,5,5,5-decafluoropentane, and the like; preferably those having 4 to 8 carbon atoms are used. For them, commercial products, such as Novec series produced by 3M and AE-3000 produced by AGC, can be used as they are.

Usable examples of water-soluble organic solvents include ketones such as acetone and methyl ethyl ketone, alcohols such as methanol, ethanol, and isopropyl alcohol, and the like. The water-soluble organic solvent is compounded for the purpose of achieving solubility for the silicate oligomer and catalyst-derived water.

Since solvents affect the solubility of the perfluoropolyether group-containing silane compound, the silicate oligomer and the catalyst, the reactivity of hydrolyzable groups, the volatility of the coating liquid, the film forming properties of the coating film, and the coating film transparency, a mixed solvent of one or more fluorine-based solvents and one or more water-soluble organic solvents is preferably used.

Examples of catalysts include organic titanium compounds such as tetra n-butyl titanate, organic acids such as formic acid, acetic acid, and fluorine-modified carboxylic acids, and inorganic acids such as hydrochloric acid and nitric acid. As the catalyst, in terms of, the storage stability of the coating liquid, the film forming properties of the coating film, and durability, as well as the promotion of hydrolysis and the condensation reaction of the perfluoropolyether group-containing silane compound and the silicate oligomer, inorganic acids, such as hydrochloric acid and nitric acid, are preferably used. Regarding the catalyst-derived water quality, in terms of not containing impurities, ion exchange water or pure water, including ultrapure water, is preferably used. The compounding amount of such catalyst-derived water is preferably within the range of 1 to 2 times equivalent to the hydrolyzable groups contained in the perfluoropolyether group-containing silane compound and the silicate oligomer.

The perfluoropolyether group-containing silane compound and the silicate oligomer are uniformly dissolved in a solvent, a catalyst is then added, followed by stirring for 1 to 24 hours preferably while maintaining a liquid temperature of about 30 to 70°C to subject the perfluoropolyether group-containing silane compound and the silicate oligomer to hydrolysis and a condensation reaction, thereby preparing a surface modifier stock solution. If the liquid temperature is 30°C or less, the hydrolysis and condensation reaction of the perfluoropolyether group-containing silane compound and the silicate oligomer tend to be insufficient, which tends to have negative effects on coating film appearance and performance. On the other hand, if the liquid temperature is 70°C or more, the condensed silane compounds are more likely to be further condensed, which tends to have negative effects on the stability of the synthetic solution.

The reaction liquid used herein preferably contains 1 to 3 mass% of a perfluoropolyether group-containing silane compound, 1.5 to 27 mass% of silicate oligomer, 30 to 70 mass% of at least one or more fluorine-based solvents, 20 to 50 mass% of at least one or more water-soluble organic solvents, 0.01 to 3 mass% of a catalyst, and 1 to 5 mass% of water, based on the total amount of the reaction liquid.

By setting the content of the fluorine-based organic solvent to 30 to 70 mass% and the content of the water-soluble organic solvent to 20 to 50 mass%, the tendency to insufficient solubility of the solute components, i.e., the perfluoropolyether group-containing silane compound and the silicate oligomer, and the hydrolysate and condensate thereof can be avoided. If the catalyst is used at a ratio of less than 0.01 mass%, catalytic ability is insufficient, and the condensation reaction of the perfluoropolyether group-containing silane compound and the silicate oligomer tends to be insufficient. If the catalyst is used at a ratio of greater than 3 mass%, liquid storage stability and coating film performance tend to be insufficient. Further, if water is used at a ratio of less than 1 mass%, reactivity during synthesis may be less likely to advance. If water is used at a ratio of more than 5 mass%, the components are less likely to dissolve, and the coating film appearance may tend to have coating unevenness.

The resulting reaction liquid of the perfluoropolyether group-containing silane compound and silicate oligomer is diluted with a solvent, preferably a mixed solvent of a fluorine-based solvent and a water-soluble organic solvent at a mass ratio of 50:50 to 70:30, and is preferably prepared so that the dilution concentration of components other than the solvents is 0.1 to 3 mass%, thus resulting in a surface modifier.

### EXAMPLES

The following describes the present invention with reference to Examples.

### Synthesis Example 1

In a three-necked flask with a capacity of 100 mL equipped with a Dimroth condenser, a calcium chloride tube, a thermometer, a stirrer, and a mantle heater for heating, 23.3 g (15.22 mmol) of perfluoropolyether allylamine [number average molecular weight Mn: 1531.29]:

C₃F₇O[CF(CF₃)CF₂O]ₘCF(CF₃)CONHCH₂CH=CH₂

m: 7 (number average degree of polymerization determined by F-NMR and having a certain level of distribution)
and 11.0 g of 1,3-bis(trifluoromethyl)benzene were charged and stirred, after which 0.08 g (94 µl) of Karstedt catalyst Pt·CH₂=CHSiMe₂OMe₂OSiCH=CH₂ was charged. While warming at 80°C, 2.1 g (17.18 mmol) of trimethoxysilane [molecular weight Mw: 122.2] was added dropwise to start the reaction, and after stirring overnight, the reaction was stopped by cooling to room temperature.

The reaction mixture was distilled under reduced pressure to obtain 18.1 g (yield: 71.4%) of the target compound, i.e., a pale yellow transparent perfluoropolyether group-containing silane compound [Ia] [number average molecular weight Mn: 1653.49].

C₃F₇O[CF(CF₃)CF₂O]ₘCF(CF₃)CONH(CH₂)₃Si(OCH₃)₃ [Ia]

F-NMR(CDCl₃,CFCl₃)

-142.8 to 143.6ppm ; -OCF(CF₃)CF₂O-
-130.4ppm ; -CF(CF₃)CONH-
-128.6ppm ; CF₃CF₂CF₂O-
-81.6 to -77.9ppm;

   CF₃CF₂CF₂O[CF(CF₃)CF₂O]ₘCF(CF₃)CONH

H-NMR(CDCl₃,TMS)

δ8.27 ; CONHCH₂CH₂CH₂Si(OCH₃)₃
δ3.34 to 3.49 ; CONHCH₂CH₂CH₂Si(OCH₃)₃
δ1.70 ; CONHCH₂CH₂CH₂Si(OCH₃)₃
δ0.62 ; CONHCH₂CH₂CH₂Si(OCH₃)₃

### Synthesis Example 2

In a three-necked flask with a capacity of 100 mL equipped with a Dimroth condenser, a calcium chloride tube, a thermometer, a stirrer, and a mantle heater for heating, 17g (10.82 mmol) of perfluoropolyether allylamine [number average molecular weight Mn: 1571.34]:

C₃F₇O[CF(CF₃)CF₂O]ₘCF(CF₃)CON(CH₂CH=CH₂)₂

m: 7 (number average degree of polymerization determined by F-NMR and having a certain level of distribution)
and 8 g of 1,3-bis(trifluoromethyl)benzene were charged and stirred, after which 0.08 g (94 µl) of Karstedt catalyst Pt·CH₂=CHSiMe₂OMe₂OSiCH=CH₂ was charged. While warming at 80°C, 2.8 g (22.91 mmol) of trimethoxysilane [molecular weight Mw: 122.2] was added dropwise to start the reaction, and after stirring overnight, the reaction was stopped by cooling to room temperature.

The reaction mixture was distilled under reduced pressure to obtain 14.2 g (yield: 71.7%) of the target compound, i.e., a pale yellow transparent perfluoropolyether group-containing silane compound [Ib] [number average molecular weight Mn: 1815.75].

C₃F₇O[CF(CF₃)CF₂O]ₘCF(CF₃)CON[(CH₂)₃Si(OCH₃)₃]₂ [Ib]

F-NMR(CDCl₃,CFCl₃)

-143.0 to -143.8ppm ; -OCF(CF₃)CF₂O-
-123.6 to -123.9ppm ; -CF(CF₃)CONH-
-128.8ppm ; CF₃CF₂CF₂O-
-77.1 to -83.6ppm;

   CF₃CF₂CF₂O[CF(CF₃)CF₂O]ₘCF(CF₃)CONH
H-NMR(CDCl₃,TMS)

δ3.38 to 3.71 ; CON[CH₂CH₂CH₂Si(OCH₃)₃]₂
δ1.75 ; CON[CH₂CH₂CH₂Si(OCH₃)₃]₂
δ0.6 ; CON[CH₂CH₂CH₂Si(OCH₃)₃]₂

### Example 1

In a flask equipped with a T-shaped connector for nitrogen sealing, a Dimroth condenser, a thermometer, a stirrer, and a mantle heater for heating, 46.2 g of C₄F₉OC₂H₅ (Novec 7200, produced by 3M) and 30.8 g of isopropyl alcohol [IPA] (IPA, produced by Daishin Chemical Co., Ltd.) were charged in a fluorine-based solvent, followed by stirring and mixing at room temperature, and in the resulting mixed solvent (fluorine-based organic solvent:water-soluble organic solvent = 60:40), 1.1 g (0.67 mmol) of the perfluoropolyether group-containing silane compound [1a] and 4.30 g (7.45 mmol) of silicate oligomer CH₃O[Si(OCH₃)₂O]₅CH₃ (MKC Silicate MS51, produced by Mitsubishi Chemical Corporation; molecular weight Mw: 576.8) were charged, followed by stirring. After confirming that the components were dissolved transparently, 2.0 g of 0.5M nitric acid was charged, followed by heating at 50°C and stirring for 1 hour. After the reaction was completed, the resultant was cooled to room temperature and filtered through a membrane filter to obtain a coating stock solution with a recovery amount of 80.98 g (recovery rate: 95.9%) and a uniformly and transparently dissolved liquid appearance. Next, this coating stock solution was diluted 5 times with a mixed solvent (C₄F₉OC₂H₅:IPA = 60:40) to prepare a coating liquid.

### Example 2

In Example 1, the amount of silicate oligomer was changed to 2.91 g(5.04 mmol), and a coating liquid was prepared from a coating stock solution with a recovery amount of 80.02 g (recovery rate: 96.4%) and a uniformly and transparently dissolved liquid appearance.

### Example 3

In Example 1, the same amount (0.61 mmol) of perfluoropolyether group-containing silane compound [Ib] was used in place of the perfluoropolyether group-containing silane compound [Ia], and a coating liquid was prepared from a coating stock solution with a recovery amount of 81.84 g (recovery rate: 97.0%) and a uniformly and transparently dissolved liquid appearance.

### Example 4

In Example 3, the same amount (3.88 mmol) of methyl silicate oligomer (MKC Silicate MS56, produced by Mitsubishi Chemical Corporation; weight average molecular weight Mw: 1107.6) was used as the silicate oligomer, and a coating liquid was prepared from a coating stock solution with a recovery amount of 81.93 g (recovery rate: 97.1%) and a uniformly dissolved liquid appearance.

### Example 5

In Example 1, the amount of silicate oligomer was changed to 5.80 g (10.05 mmol), and a coating liquid was prepared from a coating stock solution with a recovery amount of 82.11 g (recovery rate: 95.6%) and a uniformly dissolved liquid appearance.

### Comparative Example 1

The perfluoropolyether group-containing silane compound [1a] was charged in a fluorine-based organic solvent (Novec 7200) to 0.3 mass% and stirred at room temperature for 1 hour to prepare a coating liquid.

### Comparative Example 2

In Example 1, the amount of silicate oligomer was changed to 0.73 g (1.26 mmol), and a coating liquid was prepared from a coating stock solution with a recovery amount of 78.18 g (recovery rate: 96.7%) and a uniformly and transparently dissolved liquid appearance.

### Comparative Example3

In Example 1, the amount of silicate oligomer was changed to 1.45 g (2.51 mmol), and a coating liquid was prepared from a coating stock solution with a recovery amount of 78.78 g (recovery rate: 96.6%) and a uniformly and transparently dissolved liquid appearance.

### Comparative Example 4

In Example 1, the same amount (20.64 mmol) of tetraethoxysilane(tetraethyl orthosilicate, produced by FUJIFILM Wako Pure Chemical Corporation) was used as the silicate oligomer, and a coating liquid was prepared from a coating stock solution with a recovery amount of 74.98 g (recovery rate: 94.4%) and a uniformly and transparently dissolved liquid appearance.

### Comparative Example 5

In Example 1, 5.4 g of Novec 7200 and 91.5 g of IPA were charged in a flask equipped with a T-shaped connector for nitrogen sealing, a Dimroth condenser, a thermometer, a stirrer, and a mantle heater for heating, and stirred at room temperature, and in the resulting mixed solvent (mixing ratio of Novec 7200:IPA = 5.6:94.4), 1.4 g (0.77 mmol) of the perfluoropolyether group-containing silane compound [1b] and 4.0 g (6.93 mmol) of silicate oligomer CH₃O[Si(OCH₃)₂O]₅CH₃ (MKC Silicate MS51) were charged and stirred. After confirming that the components were dissolved transparently, 11.6 g of 0.1M nitric acid was charged, followed by heating at 50°C and stirring for 1 hour to obtain a cloudy coating stock solution with a recovery amount of 112.48 g (recovery rate: 98.8%) in which precipitates were formed. The upper layer of the coating stock solution was collected and used as a coating liquid.

Slide glass S1215 and stainless steel plate SUS304 mirror polished products were dipped in the coating liquid obtained in each of the above Examples and Comparative Examples to apply the coating liquid thereto, which was then cured in a constant temperature and humidity chamber at 60°C and 80% RH for 2 hours, followed by rinse cleaning with a fluorine-based solvent. Thereafter, the coating film was crosslinked by heating at 120°C for 10 minutes to produce performance evaluation test pieces. The coating films formed on the slide glass test pieces were evaluated for the film forming properties, haze value, and water- and oil- repellency. Further, the coating films formed on the stainless steel plate test pieces were evaluated for the water- and oil- repellency and durability (abrasion resistance).

Table 1 shows the obtained results.

Film forming properties: After a coating film was formed on slide glass S1215, its surface was visually observed.

When a uniform coating film was formed without coating unevenness, such as bouncing or flow, on the coated surface, this case was evaluated as "good," and when the coating film appearance had any defects or significant structural coloration, this case was evaluated as "coating unevenness."

Haze value: After a coating film was formed on slide glass S1215, the haze value was measured using a haze meter (HZ-V3, produced by Suga Test Instruments Co., Ltd.) according to JIS K7136 corresponding to ISO 14782.

This was used as an evaluation index of transparency.

Static contact angle: Using Drop Master DM500 produced by Kyowa Interface Chemical Co., Ltd., droplets of 2 µl of pure water or n-hexadecane contained in the syringe tip were slowly applied to the coating film (the surface to be tested). The contact angle of the droplets attached to the surface was measured by the droplet method, and the value analyzed by the θ/2 method was used as the static contact angle.

This was used as an evaluation index of water- and oil- repellency.

Dynamic sliding angle: Using Drop Master DM500, droplets of 10 µl of pure water or 7 µl of n-hexadecane contained in the syringe tip were slowly applied to the coating film (the surface to be tested), and this operation was repeated three times to apply the droplets. Then, the sample stage was tilted, the tilt angle at which the sample began to slide (sliding angle) was measured, and the value analyzed by the tangent method was used as the dynamic sliding angle.

This was used as an evaluation index of adhesion and droplet removability.

Low sliding angle of pure water means excellent dynamic water
repellency and high gliding water performance.

Further, low sliding angle of n-hexadecane means excellent dynamic oil repellency and high stain resistance.

Durability (abrasion resistance): Numbers were written on the stainless steel plate SUS304 coated surface using an oil-based ink marker Zebra Mackie 1 mm, and then wiped off with a JK wiper. This operation was repeated, and the number of times until the numbers could be erased without leaving any traces on the sample was measured.

This was used as an evaluation index of stain resistance (abrasion resistance).

A larger number of times until marker traces were erased means stain resistance (abrasion resistance).

**Table 1**

| Measurement item | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Slide glass | Film forming properties | | good | good | good | good | good | good | coating unevenness | good | coating unevenness (Spotted) | coating unevenness (structural coloration) |
| | Haze value (%) | | 0.02 | 0.18 | 0.06 | 0.14 | 0.04 | 0.01 | 0.62 | 0.3 | 0.37 | - |
| | Static contact angle (°) | pure water | 115.6 | 114 | 115.7 | 116.3 | 112.8 | 111.3 | 116.1 | 115.7 | 114.2 | 115 |
| | | n-hexadecane | 67.6 | 69.4 | 68.5 | 68.6 | 68 | 68.8 | 70.4 | 69.5 | 69.6 | 69 |
| | Dynamic sliding angle (°) | pure water | 6 | 10 | 7 | 8 | 10 | 28 | 19 | 15 | 11 | 10 |
| | | n-hexadecane | 5 | 5 | 3 | 3 | 3 | 12 | 10 | 7 | 8 | 3 |
| Stainless steel plate | Static contact angle (°) | pure water | 115 | 115 | 113.3 | 115.4 | 114 | 120.1 | 120 | 118 | 117 | - |
| | | n-hexadecane | 68 | 68 | 67.7 | 68.6 | 68 | 69.9 | 70 | 70 | 69.5 | - |
| | Dynamic sliding angle (°) | pure water | 20 | 27 | 29 | 18 | 20 | Not fallen | 42 | 37 | 27 | - |
| | | n-hexadecane | 11 | 15 | 13 | 12 | 10 | Not fallen | 25 | 21 | 15 | - |
| | Durability | | >50 times | >50 times | >50 times | >50 times | >50 times | 0 tine | 2 times | 9 times | 42 times | - |

Further, as an evaluation index of coating film weather resistance, an outdoor exposure test was performed. The results obtained in the Examples 1 to 2, 5 and Comparative Examples 1 to 3 are shown in the following Table 2.

Weather resistance: According to JIS Z2381, the exposure test site was set up on the roof of a building, the test surface was fixed to the test stand at 45° to the south, and the static contact angle of pure water or n-hexadecane before the test was measured.

Every 2 weeks, the test piece was removed, rinsed with ion exchange water, wiped with a JK wiper, and blown by air. Then, the static contact angle of pure water or n-hexadecane was measured.

**Table 2**

| | | Contact angle (°) | | | | | | |
|---|---|---|---|---|---|---|---|---|
| | | Before use | after 14 days | after 28 days | after 42 days | after 56 days | after 70 days | after 84 days |
| Example 1 | pure water | 116 | 115 | 111 | 106 | 94 | 83 | 69 |
| | n-hexadecane | 70 | 70 | 68 | 61 | 58 | 50 | 47 |
| Example 2 | pure water | 114 | 112 | 108 | 103 | 95 | 81 | 74 |
| | n-hexadecane | 69 | 69 | 66 | 63 | 59 | 53 | 48 |
| Example 5 | pure water | 113 | 109 | 107 | 101 | 93 | 81 | 66 |
| | n-hexadecane | 68 | 66 | 65 | 60 | 55 | 48 | 47 |
| Comparative Example 1 | pure water | 112 | 110 | 103 | 89 | 71 | 55 | 39 |
| | n-hexadecane | 71 | 67 | 58 | 50 | 41 | 28 | 17 |
| Comparative Example 2 | pure water | 116 | 110 | 103 | 89 | 81 | 64 | 52 |
| | n-hexadecane | 72 | 72 | 65 | 54 | 49 | 37 | 31 |
| Comparative Example 3 | pure water | 116 | 115 | 109 | 100 | 85 | 69 | 52 |
| | n-hexadecane | 71 | 71 | 66 | 57 | 51 | 41 | 32 |

Furthermore, as a stability evaluation index of coating liquid, a storage stability test was performed. The results obtained in the Examples 1 to 2, 5 and Comparative Example 5 are shown in the following Table 3.

Storage stability test: A screw tube bottle was filled with the prepared coating liquid, sealed, and stored in a thermostatic bath set at 40°C, and the coating film performance was evaluated after storage for 1 week.

**Table 3**

| | Before test | | | | After test | | | | |
|---|---|---|---|---|---|---|---|---|---|
| | Static contact angle (°) | | Dynamic sliding angle (°) | | Static contact angle (°) | | Dynamic sliding angle (°) | | liquid appearance |
| | pure water | n-hexadecane | pure water | n-hexadecane | pure water | n-hexadecane | pure water | n-hexadecane | |
| Example 1 | 116 | 68 | 6 | 5 | 112 | 66 | 10 | 4 | uniformly and transparently |
| Example 2 | 114 | 69 | 10 | 5 | 112 | 67 | 12 | 5 | uniformly and transparently |
| Example 5 | 113 | 68 | 10 | 3 | 114 | 67 | 10 | 5 | uniformly and transparently |
| Comparative Example 5 | 116 | 72 | 11 | 5 | 106 | 67 | 28 | 5 | cloudy (Precipitated) |

The above results reveal the following.
(1) On the slide glass substrates constructed using the fluorine-containing surface treating agent of each Example, coating films with excellent static water- and oil- repellency, dynamic water repellency, and dynamic oil repellency, and good transparency are formed. Moreover, on the stainless steel plate substrates constructed in the same manner, coating films with excellent static water- and oil- repellency, dynamic water repellency, and dynamic oil repellency, and excellent durability (abrasion resistance) are formed.
(2) Examples 1, 2, and 5 are superior in weather resistance compared with Comparative Examples 1 to 3, which have a higher percentage of the perfluoropolyether group-containing silane compound.
(3) In Comparative Example 5, which uses a solvent with a low mixing ratio of the fluorine-based solvent, performance deterioration is significant at 40°C after 1 week; however, in Examples 1, 2, and 5, there is no large difference in performance, and the liquid appearance maintains uniform transparency.

### INDUSTRIAL APPLICABILITY

The surface modifier of the present invention can be effectively used for the surface modification of items exposed to the outdoor and sliding environments (glass substrates, stainless steel substrates, etc.), and thus can be preferably used, for example, for outdoor applications, such as automotive and architectural glass, as well as antifouling applications for items that require oil repellency, such as camera lenses and glasses lenses.

## Claims

1. A surface modifier comprising, as an active ingredient, a condensation reaction product of a perfluoropolyether group-containing silane compound and silicate oligomer at a mass ratio of 40:60 to 10:90, wherein the perfluoropolyether group-containing silane compound is a compound represented by the general formula:
CF₃(CF₂)ₘO(C₃F₆O)ₙ(C₂F₄O)ₒ(CF₂O)ₚ(C₂F₄)_{q}(CF₂)ᵣCONX(CH₂)ₛSi(OR)₃ [I]
(wherein m is an integer of 0 to 2; n, o, and p are each an integer of 0 to 50; q and r are each an integer of 0 to 2; s is an integer of 0 to 10; X is a hydrogen atom or (CH₂)sSi(OR)₃; and R is an alkyl group having 1 to 3 carbon atoms).

2. The surface modifier according to claim 1, wherein the perfluoropolyether group-containing silane compound is
C₃F₇O[CF(CF₃)CF₂O]ₙCF(CF₃)CONH(CH₂)₃Si(OCH₃)₃
or
C₃F₇O[CF(CF₃)CF₂O]ₙCF(CF₃)CON[(CH₂)₃Si(OCH₃)₃]₂.

3. The surface modifier according to claim 1, wherein the silicate oligomer is methyl silicate, ethyl silicate, or a mixture thereof having a weight average molecular weight Mw of 500 to 1500.

4. The surface modifier according to claim 1, wherein the perfluoropolyether group-containing silane compound and the silicate oligomer are dissolved in a solvent that a mixed solvent of a fluorine-based organic solvent and a water-soluble organic solvent.

5. The surface modifier according to claim 4, wherein the mixed solvent is a fluorine-based solvent and a water-soluble organic solvent at a mass ratio of 50:50 to 70:30.

6. The surface modifier according to claim 5, wherein the dilution concentration of components other than the solvents is 0.1 to 3 mass%.
